# EUROPÄISCHE PATENTSCHRIFT

(11) **EP 1 373 040 B1**
(45) Veröffentlichungstag und Bekanntmachung des Hinweises auf die Patenterteilung: **28.04.2010**
(21) Anmeldenummer: 02714175.3
(22) Anmeldetag: 27.02.2002
(51) Int. Cl.: B60T 13/52, B60T 13/46

(54) **BREMSKRAFTVERSTÄRKER MIT EINEM ANSCHLUSSELEMENT MIT DEFINIERTER WINKELLAGE**
BRAKE SERVO COMPRISING A CONNECTING ELEMENT WITH A DEFINED ANGULAR POSITION
SERVOFREIN COMPRENANT UN ELEMENT DE RACCORD PRESENTANT UNE POSITION ANGULAIRE DEFINIE

(30) Priorität: 21.03.2001 DE 10113910; 11.05.2001 DE 10122952
(43) Veröffentlichungstag der Anmeldung: 02.01.2004
(73) Patentinhaber: Continental Teves AG & Co. oHG, 60488 Frankfurt am Main (DE)
(72) Erfinder: FALLER, Jürgen, 63796 Kahl (DE)
(86) Internationale Anmeldenummer: PCT/EP2002/002059
(87) Internationale Veröffentlichungsnummer: WO 2002/076802

(56) Entgegenhaltungen:
- DE-A- 10 008 795
- US-A- 4 195 661
- US-A- 5 224 410
- US-A- 5 261 312

## Beschreibung

Die Erfindung betrifft einen Bremskraftverstärker für ein Kraftfahrzeug mit den Merkmalen des Oberbegriffs des Patentanspruchs 1, bzw. mit den Merkmalen des Oberbegriffs des Patentanspruchs 3. Ein Bremskraftverstärker dieser Gattung wurde im nachveröffentlichten Dokument DE-A-100 08 795 offenbart.

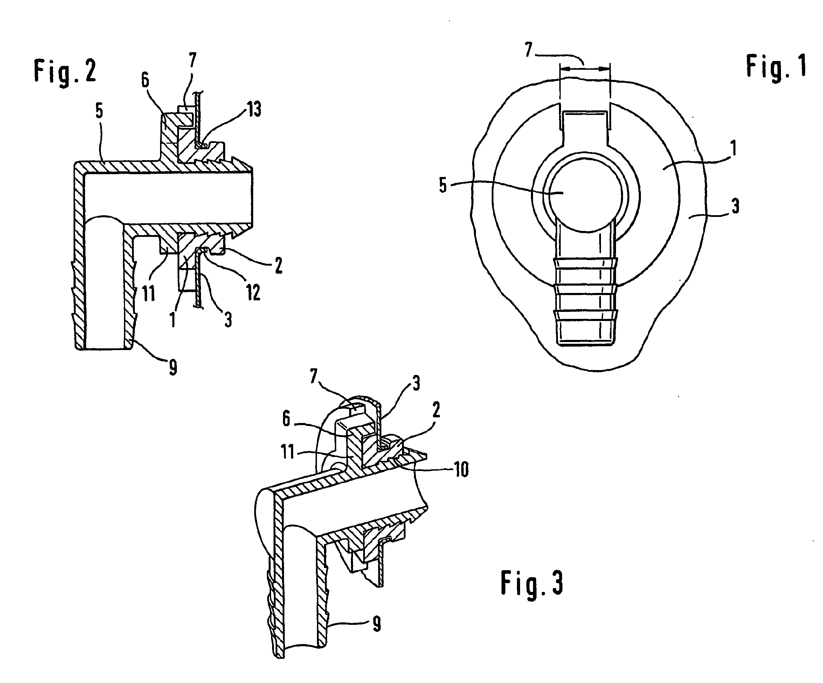

Ein derartiger Bremskraftverstärker ist weiterhin aus dem Bremsenhandbuch der Anmelderin, Auflage 9.1, Seite 101, Figuren 1 bis 3 bekannt, und verfügt über wenigstens ein Verstärkergehäuseteil mit einer Öffnung, in die ein Dichtungselement aus flexiblem Werkstoff eingebracht ist und mit einem pneumatischen Anschluß, welcher in eine Ausnehmung des Dichtungselementes einschiebbar ist. Bei dem pneumatischen Anschluß kann es sich beispielsweise um einen einfachen pneumatischen Anschluß oder um eine Baueinheit aus einem pneumatischen Anschluß mit einem integrierten Rückschlagventil handeln. Der Anschluß dient vorzugsweise der Vakuumversorgung des Bremskraftverstärkers.

Von verschiedenen Automobilherstellern wird die Montage des pneumatischen Anschluß aus unterschiedlichen Gründen im eigenen Werk vorgenommen. Dabei ist es wegen der Platzprobleme notwendig, daß das vielfach in einen Winkel abgehende Anschlußelement in einer bestimmten in Drehlager eingebaut sein muß, damit die Zuleitungen sicher zugeführte werden können, ein Reiben oder Scheuern an anderen Aggregaten im Motorraum vermieden wird und es nicht zur technischen Problemen oder zu Platzproblemen kommt.

Aufgabe der vorliegenden Erfindung ist es daher, einen Bremskraftverstärker zu schaffen, welcher mit geringem Aufwand sowie erst im Werk des Automobilherstellers komplettierbar, das heißt mit den notwendigen pneumatischen Anschlüssen ausrüstbar ist, wobei die Richtung des Abganges der Anschlußschläuche eindeutig vorgegeben ist.

Diese Aufgabe wird bei einem Bremskraftverstärkern der sich aus dem Oberbegriff des Anspruchs 1, bzw. des Anspruchs 3, ergebenden Gattung durch die Anwendung der in dem kennzeichnenden Teil des Anspruchs 1 aufgeführten Merkmale gelöst. Diese Lösung der erfindungsgemäßen Aufgabe besteht im Prinzip also darin dem Anschlußelement und dem Dichtungselement jeweils einander zugeordnete Vorsprünge und Ausnehmungen zu geben, so daß diese nur in einer bestimmten Winkellage zwischen Anschlußelement und Dichtungselement zusammenpassen. Nur in dieser Lage können die beiden Teile beispielsweise durch Verrasten zusammengefügt werden. Mit den erfindungsgemäßen Merkmalen ist es nicht nur möglich, ein Zusammenfügen von Anschlußelement und Dichtungselement in einem falschen Winkel zu verhindern. Gleichzeitig werden die beiden zuletzt genannten Bauelemente auch gegen ein Verdrehen gegeneinander gesichert, da durch die ineinandergreifenden Vorsprünge und Ausnehmungen sich hinterschneidende Flächen ergeben, die ein Verdrehen der beiden Bauelemente gegeneinander verhindern.

Dokument US-5,261,312-A offenbart dei Befestigung eines Sensorelementes, mit Mittel die eine richtige Positionierung des sensors gewährleisten.

Um die Drehfestigkeit des Anschlußelementes gegenüber dem Gehäuse des Bremskraftverstärkers zu erhöhen und auch die winkelgerechte Einbaulage das Dichtungselementes gegenüber dem Gehäuse des Bremskraftverstärkers zu sichern empfiehlt sich in Weiterbildung der Erfindung die Merkmalskombination nach Anspruch 2.

Eine zweite gleichwertige Lösung der erfindungsgemäßen Aufgabe ergibt sich durch die aus dem kennzeichnenden Teil des Anspruchs 3 ersichtliche Merkmalskombination. Diese Lösung besteht im Prinzip darin dem Anschlußelement und dem Gehäuseteil jeweils einander zugeordnete Vorsprünge und Ausnehmungen zu geben, sodaß diese nur in einer bestimmten Winkellage zwischen Anschlußelement und Gehäuseteil zusammenpassen. Nur in dieser Lage können das Dichtungselement und das Anschlusselement beispielsweise durch Verrasten zusammengefügt werden, weil nur in dieser Winkelstellung das Anschlusselement tief genug in das Dichtungselement eingefügt werden kann. Mit den erfindungsgemäßen Merkmalen ist es nicht nur möglich, ein Zusammenfügen von Anschlußelement und Gehäuseteil in einem falschen Winkel zu verhindern. Gleichzeitig werden die beiden zuletzt genannten Bauelemente auch gegen ein Verdrehen gegeneinander gesichert, da durch die ineinandergreifenden Vorsprünge und Ausnehmungen sich hinterschneidende Flächen ergeben, die ein Verdrehen der beiden Bauelemente gegeneinander verhindern. Durch die Drehsicherung des Anschlusselementes gegenüber dem Gehäuse ist auch der vom Anschlusselement abgehende Abgang in seiner Winkelstellung festgelegt.

Die Ausnehmung in dem Gehäuseteil ist versetzt gegenüber der Mittellinie des Lochs in dem Gehäuseteil. Dabei kann die Ausnehmung gegenüber der Mittellinie im wesentlichen in Umfangsrichtung oder in radialer Richtung versetzt sein. Erstreckt man die Ausnehmung in Umfangesrichtung, so empfiehlt es sich, daß die Ausnehmung eine wannenförmige Gestalt hat, da hier die Verformung des Materials, aus dem das Gehäuseteil besteht, nicht so groß ist. Eine andere vorteilhafte weiterbildung hinsichtlich der Anordnung für die Ausnehmung ergibt sich aus der in Anspruch 4 aufgeführten Merkmalskombination. Dabei kann beispielsweise die Anordnung in den Bereich einer in dem Gehäuseteil umlaufenden Sicke angeordnet werden. In vorteilhafter Weiterbildung der Erfindung wird empfohlen, bei einer radialen Lage der Ausnehmung gegenüber der Mittellinie die Merkmalskombination nach Anspruch 5 anzuwenden. Dies gilt insbesondere bei Verwendung der Merkmale nach Anspruch 6, da hierdurch die Verformungsarbeit in dem Gehäuseteil besonders gering wird.

Weitere Einzelheiten der Erfindung gehen aus der Beschreibung und der Zeichnung hervor. Die Erfindung wird nachstehend anhand der Zeichnung, welche ein bevorzugtes Ausführungsbeispiel zeigt, näher beschrieben. In der Zeichnung zeigt:
Fig. 1 eine Draufsicht auf einen Ausschnitt des Gehäuses mit eingefügten Dichtungselement und Anschlußelement
Fig. 2 einen Schnitt durch die Anordnung nach Fig. 1 in der Mittelebene des gewinkelten Anschlußelementes
Fig. 3 den Schnitt durch die Darstellung nach Fig. 2 in perspektivischer Darstellung,
Fig. 4 in perspektivischer Darstellung das Dichtungselement vom Gehäuse her gesehen,
Fig. 5 einen Ausschnitt aus dem Gehäuse von der Innenseite her gesehen,
Fig. 6 die Verbindung von Dichtungselement und Gehäuseabschnitt gemäß den Figuren 4 und 5,
Fig. 7 die Verbindung von Anschlußelement, Dichtungselement und Gehäuse und
Fig. 8 einen Schnitt durch die Verbindung nach Fig. 7
Fig. 9 einen Ausschnitt aus einer räumlichen Darstellung des Gehäuses mit einem zweiten Ausführungsbeispiel,
Fig. 10 eine Draufsicht auf Fig. 9,
Fig. 11 einen Schnitt längs der Linie A-A in Fig. 10.

Fig. 1 zeigt in Draufsicht einen Ausschnitt aus dem Gehäuse 3 des Bremskraftverstärkers, in welches das Dichtungselement 1 eingesetzt ist wobei in das Dichtungselement 1 wiederum das Anschlußelement 5 eingefügt ist. Das Anschlußelement 5 besitzt einen gewinkelten Abgang 9 welcher gemäß der Aufgabe in einer vorgegebenen Winkelstellung seiner Längsachse gegenüber dem Gehäuse 3 eingebaut werden soll.

Die gewünschten Drehlage des Anschlußelementes 5 gegenüber dem Dichtungselement 1 wird mit Hilfe eines zweiten Vorsprungs 6 erreicht, welcher in eine zugeordnete erste Ausnehmung 7 in dem Dichtungselement 1 eingreift. Der als vorspringende Nase ausgestaltete zweiten Vorsprungs 6 ist so lang ausgeführt, daß eine sichere Verrastung nur möglich ist, wenn die Nase 6 in die Ausnehmung 7 von eingreift. Das Dichtungselement und daß Anschlußelement sind mit Hilfe von zackenförmigen Vorsprüngen 10 miteinander verrastbar. Eine Konsole 11 an dem Anschlußelement 5 legt den Abstand des Anschlußelementes von dem Dichtungselement 1 und damit dem Gehäuse 3 fest. Das Gehäuse 3 ist mit einem nach innen umgeformten Rand 12 versehen weicher die Öffnung 13 begrenzt. Hierdurch können besser radiale Kräfte aufgenommen werden, ohne daß das Dichtungselement zerschnitten wird. Weiterhin ist hierdurch die gegenseitige radiale Anlagefläche zwischen Dichtungselement und Gehäuse 3 vergrößert so daß sich der Reibschluss gegen Verdrehen verbessert.

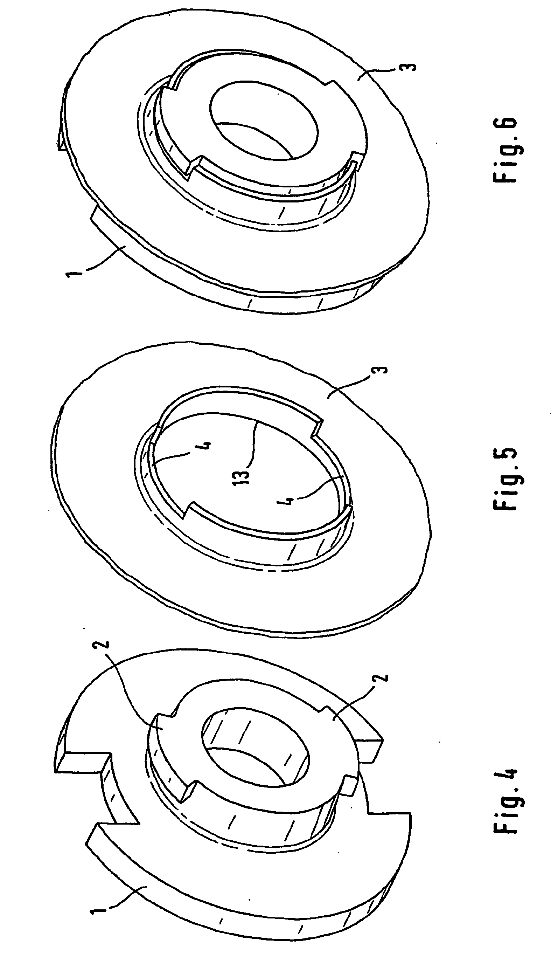

Die Figuren 4 bis 6 zeigen einen Ausschnitt des Gehäuses 3, das Dichtungselement 1 sowie die Verbindung dieser beiden Bauelemente. Das Dichtungselement 1 ist mit zwei einander gegenüberliegenden, symmetrisch ausgestalteten dritten Vorsprüngen 2 versehen die geeignet sind, in zugeordnete dritte Ausnehmungen 4 des Gehäuses 3 einzugreifen. In Fig. 6 werden die beiden zusammengefügten Bauelemente gezeigt, die durch das Eingreifen von dritten Vorsprüngen in dritte Ausnehmungen gegeneinander gegen Verdrehen gesichert sind. Selbstverständlich können die dritten Ausnehmungen und Vorsprünge derart ausgestaltet sein, daß nur eine einzige gegenseitige Winkellage ein Verbinden der beiden genannten Bauelemente erlaubt. Das kann beispielsweise dadurch erzwungen werden, daß nur ein einziger dritter Vorsprung und eine einzige zugeordnete dritte Ausnehmung vorgesehen sind oder das dritte Vorsprünge und Ausnehmungen asymmetrisch über den Umfang der Öffnung 13 verteilt sind.

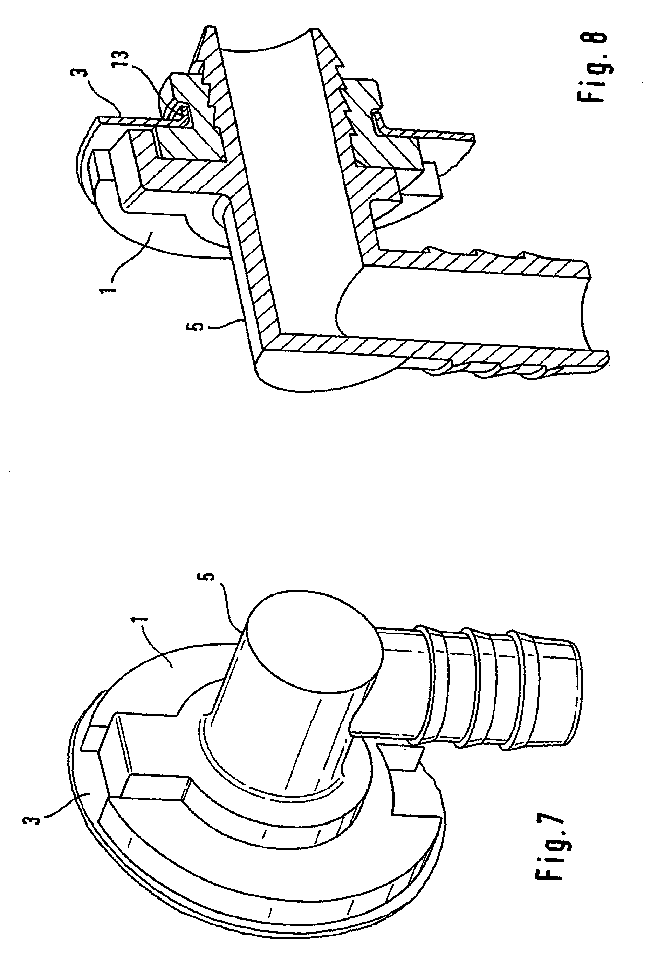

Schließlich zeigen die Figuren 7 und 8 dem Zusammenbau von Gehäuse 3 mit den Dichtungselement 1 und Anschlußelement 5. Durch entsprechende Maßnahmen bei der Herstellung des mit dem Dichtungselement versehenen Gehäuses 3 lässt sich sicherstellen, daß das Dichtungselement nur in einer bestimmten Winkellage in dem Gehäuse eingebaut ist auch wenn aus Gründen der Fertigung die dritten Ausnehmungen des Dichtungselementes symmetrisch legen.

Das Anschlußelementes kann in Weiterbildung der Erfindung mit einem Rückschlagventil versehen oder als Schlauchstutzen ausgestaltet sein.

In Fig. 9 ist in perspektivischer Darstellung ein Ausschnitt aus dem Teil eines Gehäuses 3 gezeigt, welches mit einer Ausbeulung 16 versehen ist. Derartige Ausbeulungen sind auf dem Umfang des Gehäuses 3 mehrfach vorgesehen beispielsweise auch um einen Sensor aufzunehmen. Das Gehäuse hat im wesentlichen die Form einer Schüssel, wobei die Ausbeulung 16 am Rand des Bodens der Schüssel angeordnet ist. In die Ausbeulung 16 ist eine Ausnehmung 7 eingefügt, sodaß die Ausbeulung im wesentlichen eine U-Form hat. Zwischen die Schenkel der U-förmigen Ausbeulung ragt ein Vorsprung 6 des Anschlusselements 5, wobei das Ende des Vorsprungs 6 durch die Ausnehmung 7 aufgenommen wird. Damit ist das Ende des Vorsprungs 6 zwischen den Seitenwänden der Ausnehmung 7 gefangen, sodaß sich der Vorsprungs 6 nicht mehr um die Längsachse des Anschlusselementes 5 drehen kann und so die Drehlage des Anschlusselementes 5 festgelegt ist. Ist aber die Anschlusslage des Anschlusselementes festgelegt, so ist auch die Winkellage des Abgangs 9 festgelegt, welche einstückig mit dem Vorsprungs 6 verbunden ist.

Es ist auch denkbar, daß Ende des Vorsprungs 6 in einer in Umfangsrichtung an dem Boden des Gehäuses verlaufenden Ausnehmung zu fangen. In diesem Falle sollte die Ausnehmung in dem Gehäuse etwa wannenförmige sein.

In Fig. 10 ist eine vergrößerter Draufsicht auf die Darstellung nach Figur 9 gezeigt.

Figur 11 zeigt einen Schnitt längs der Schnittlinie A-A in Fig. 9. Man erkennt wiederum entsprechend den Figuren 1 bis 3 die Öffnung 13 in Gehäuse 3, in die das Dichtungselement 1 zusammen mit dem Anschlusselement 5 eingefügt ist. Die Drehsicherung erfolgt im vorliegenden Fall nicht zwischen dem Anschlusselement und dem Dichtungselement sondern zwischen dem Anschlusselement 5 und dem Gehäuse 3. Durch die Linie 18 ist angedeutet, daß der Boden des Gehäuses 3 an sich konisch geneigt ist. Der Vorsprung 6 ist noch mit einer Nase 19 versehen, die in die Ausnehmung 7 des Gehäuses ragt. Da die Umgebung seitlich der Ausnehmung 7 sehr viel höher liegt als der Grund der Ausnehmung 7,lässt sich das Anschlusselement 5 mit dem Dichtungselement 1 nur dann in die Öffnung 13 einfügen, wenn die Nase 19 in die Ausnehmung 7 eintaucht. Auf diese Weise ist die Drehlage des Anschlusselementes 5 gegenüber dem Gehäuse 3 festgelegt.

In den Figuren 9 bis 11 ist noch eine Sicke 17 gezeigt, die zur Versteifung des Gehäuses 3 dient. An sich ist es auch möglich in die Sicke eine der Ausnehmung 7 entsprechende Ausnehmung einzufügen und so die Drehlage des Anschlusselementes 5 festzulegen. Die zum Erzeugung der Ausnehmung notwendige Verformungsarbeit ist aber an der gewählten Stelle in der Nähe der Seitenwand 20 des Gehäuses 3 erheblich geringer, so daß man mit Vorteil die Ausnehmung an dieser Stelle einfügt. Das ergibt sich im wesentlichen dadurch, daß man in diesem Fall die Ausnehmung nach außen hin offen halten kann , so daß eine radial außen liegende Seitenwand der Ausnehmung entfällt.

## Patentansprüche

1. Bremskraftverstärker mit wenigstens einem Verstärkergehäuseteil (3)welches ein Loch (13) besitzt, in das ein Dichtungselement (1) aus flexiblem Werkstoff eingesetzt ist, welches Dichtungselement (1) eine Öffnung (10) aufweist, in die ein pneumatisches Anschlußelement (5) insbesondere für die Vakuumversorgung des Bremskraftverstärkers (1) einschiebbar ist, **dadurch gekennzeichnet, daß** das Dichtungselement (1) mit mindestens einem ersten Vorsprung und/oder einer ersten Ausnehmung (7) versehen ist und daß das Anschlußelement mit mindestens einer dem ersten Vorsprung bzw. der ersten Ausnehmung zugeordneten zweiten Ausnehmung und/oder zweiten Vorsprung (6) derart versehen ist, daß die einander zugeordneten Vorsprünge (6) und Ausnehmungen (7) nur in einer bestimmten Winkellage zwischen Dichtungselement (1) und Abschlußelement (5) ineinander greifen und so die rastende Zusämmenfügung von Dichtungselement (1) und Anschlußelement (5) ermöglichen.

2. Bremskraftverstärker nach Anspruch 1, **dadurch gekennzeichnet, daß** das Dichtungselement (1) mit jeweils mindestens einem dritten Vorsprung (2) und/oder einer dritten Ausnehmung versehen ist und daß die Öffnung (13) mit mindestens einer zugeordneten vierten Ausnehmung (4) und/oder vierten Vorsprung derart versehen ist, daß die einander zugeordneten Vorsprünge (2) und Ausnehmungen (4) nur in einer bestimmten Winkellage zwischen Dichtungselement (1) und Öffnung (13) ineinander greifen und so ein Zusammenfügen von Dichtungselement (1) und Öffnung (5) ermöglichen.

3. Bremskraftverstärker mit wenigstens einem Verstärkergehäuseteil (3)welches ein Loch (13) besitzt, in das ein Dichtungselement (1) aus flexiblem Werkstoff eingesetzt ist, welches Dichtungselement (1) eine Öffnung (10) aufweist, in die ein pneumatisches Anschlußelement (5) insbesondere für die Vakuumversorgung des Bremskraftverstärkers (1) einschiebbar ist, **dadurch gekennzeichnet, daß** das Verstärkergehäuseteil (3) mit mindestens einem ersten Vorsprung und/oder einer ersten Ausnehmung (7) versehen ist und daß das Anschlußelement (5) mit mindestens einer dem ersten Vorsprung bzw. der ersten Ausnehmung zugeordneten zweiten Ausnehmung und/oder zweiten Vorsprung (6) derart versehen ist, daß die einander zugeordneten Vorsprünge (6) und Ausnehmungen (7) nur in einer bestimmten Winkellage zwischen Verstärkergehäuseteil (3)und Anschlußelement (5) ineinander greifen und so die Zusammenfügung von Dichtungselement (1) und Anschlußelement (5) ermöglichen.

4. Bremskraftverstärker nach Anspruch 3,**dadurch gekennzeichnet, daß** das Gehäuseteil (3) im wesentlichen topfförmig ist, wobei die Öffnung (13) in den Boden des Topfes eingefügt ist und wobei die Ausnehmung im Gehäuseteil (3) nun radial zur Öffnung (13) versetzt angeordnet ist.

5. Bremskraftverstärker nach Anspruch 4, **dadurch gekennzeichnet, daß** die Ausnehmung (7) am Gehäuseteil (3) radial außen im Randbereich des Bodens angeordnet ist.

6. Bremskraftverstärker nach Anspruch 5, **dadurch gekennzeichnet, daß** die Ausnehmung (7) derart radial außen am Boden angeordnet ist, daß sie sich bis zur Stoßfläche zwischen dem Boden und der Mantelfläche (20) des Topfes erstreckt.

7. Bremskraftverstärker nach Anspruch 6,**dadurch gekennzeichnet, daß** die Ausnehmung (7) eine radial verlaufen die Nut bildet, welche in Richtung zur Mantelfläche (20) des Topfes hin offen ist.

## Claims

1. Brake booster with at least one booster housing part (3) possessing a hole (13) into which a sealing element (1) consisting of flexible material is inserted, which sealing element (1) has an orifice (10) into which a pneumatic connecting element (5), in particular for the vacuum supply of the brake booster (1), can be pushed, **characterized in that** the sealing element (1) is provided with at least one first projection and/or one first recess (7), and **in that** the connecting element is provided with at least one second recess and/or second projection (6) assigned respectively to the first projection and to the first recess, in such a way that the mutually assigned projections (6) and recesses (7) engage one in the other only in a specific angular position between the sealing element (1) and connecting element (5) and thus allow the latching assembly of the sealing element (1) and connecting element (5).

2. Brake booster according to Claim 1, **characterized in that** the sealing element (1) is provided in each case with at least one third projection (2) and/or one third recess, and **in that** the orifice (13) is provided with at least one assigned fourth recess (4) and/or fourth projection, in such a way that the mutually assigned projections (2) and recesses (4) engage one in the other only in a specific angular position between the sealing element (1) and orifice (13) and thus allow an assembly of the sealing element (1) and orifice (5).

3. Brake booster with at least one booster housing part (3) possessing a hole (13) into which a sealing element (1) consisting of flexible material is inserted, which sealing element (1) has an orifice (10) into which a pneumatic connecting element (5), in particular for the vacuum supply of the brake booster (1), can be pushed, **characterized in that** the booster housing part (3) is provided with at least one first projection and/or one first recess (7), and **in that** the connecting element (5) is provided with at least one second recess and/or second projection (6) assigned respectively to the first projection and to the first recess, in such a way that the mutually assigned projections (6) and recesses (7) engage one into the other only in a specific angular position between the booster housing part (3) and connecting element (5) and thus allow the assembly of the sealing element (1) and connecting element (5).

4. Brake booster according to Claim 3, **characterized in that** the housing part (3) is essentially pot-shaped, the orifice (13) being introduced into the bottom of the pot and the recess in the housing part (3) then being arranged so as to be offset radially with respect to the orifice (13).

5. Brake booster according to Claim 4, **characterized in that** the recess (7) on the housing part (3) is arranged radially on the outside in the marginal region of the bottom.

6. Brake booster according to Claim 5, **characterized in that** the recess (7) is arranged radially on the outside on the bottom in such a way that it extends as far as the abutting surface between the bottom and the surface area (20) of the pot.

7. Brake booster according to Claim 6, **characterized in that** the recess (7) forms a radially running groove which is open in the direction towards the surface area (20) of the pot.

## Revendications

1. Servofrein comprenant au moins une partie de boîtier de servofrein (3) qui possède un trou (13) dans lequel est inséré un élément d'étanchéité (1) en matériau flexible, lequel élément d'étanchéité (1) présente une ouverture (10) dans laquelle un élément de raccordement pneumatique (5) peut être enfoncé notamment pour l'alimentation en vide du servofrein, **caractérisé en ce que** l'élément d'étanchéité (1) est pourvu d'au moins une première saillie et/ou d'un premier évidement (7) et **en ce que** l'élément de raccordement est pourvu d'au moins un deuxième évidement et/ou d'une deuxième saillie (6) associé à la première saillie ou au premier évidement, de telle sorte que les saillies (6) et évidements (7) associés les uns aux autres ne viennent en prise les uns dans les autres que dans une position angulaire déterminée entre l'élément d'étanchéité (1) et l'élément de raccordement (5), et permettent ainsi l'assemblage par encliquetage de l'élément d'étanchéité (1) et de l'élément de raccordement (5).

2. Servofrein selon la revendication 1, **caractérisé en ce que** l'élément d'étanchéité (1) est pourvu dans chaque cas d'au moins une troisième saillie (2) et/ou d'un troisième évidement, et **en ce que** l'ouverture (13) est pourvue d'au moins un quatrième évidement (4) et/ou d'une quatrième saillie associés, de telle sorte que les saillies (2) et évidements (4) associés les uns aux autres ne viennent en prise les uns dans les autres que dans une position angulaire déterminée entre l'élément d'étanchéité (1) et l'ouverture (13), et permettent ainsi un assemblage de l'élément d'étanchéité (1) et de l'ouverture (13).

3. Servofrein comprenant au moins une partie de boîtier de servofrein (3) qui possède un trou (13) dans lequel est inséré un élément d'étanchéité (1) en matériau flexible, lequel élément d'étanchéité (1) présente une ouverture (10) dans laquelle un élément de raccordement pneumatique (5) peut être enfoncé notamment pour l'alimentation en vide du servofrein, **caractérisé en ce que** la partie de boîtier de servofrein (3) est pourvue d'au moins une première saillie et/ou d'un premier évidement (7) et **en ce que** l'élément de raccordement (5) est pourvu d'au moins un deuxième évidement et/ou d'une deuxième saillie (6) associés à la première saillie ou au premier évidement de telle sorte que les saillies (6) et évidements (7) associés les uns aux autres ne viennent en prise les uns dans les autres que dans une position angulaire déterminée entre la partie de boîtier de servofrein (3) et l'élément de raccordement (5) et permettent ainsi l'assemblage de l'élément d'étanchéité (1) et de l'élément de raccordement (5).

4. Servofrein selon la revendication 3, **caractérisé en ce que** la partie de boîtier (3) est essentiellement en forme de pot, l'ouverture (13) étant pratiquée dans le fond du pot et l'évidement dans la partie de boîtier (3) étant décalé à présent radialement par rapport à l'ouverture (13).

5. Servofrein selon la revendication 4, **caractérisé en ce que** l'évidement (7) sur la partie de boîtier (3) est disposé radialement à l'extérieur dans la région de bord du fond.

6. Servofrein selon la revendication 5, **caractérisé en ce que** l'évidement (7) est disposé radialement à l'extérieur sur le fond de telle sorte qu'il s'étende jusqu'à la surface de jonction entre le fond et la surface d'enveloppe (20) du pot.

7. Servofrein selon la revendication 6, **caractérisé en ce que** l'évidement (7) forme une rainure s'étendant radialement qui est ouverte dans la direction de la surface d'enveloppe (20) du pot.
